(19) Europäisches Patentamt
European Patent Office
Office européen des brevets

(11) **EP 2 023 324 A1**

(12) **EUROPEAN PATENT APPLICATION**

(43) Date of publication:
**11.02.2009 Bulletin 2009/07**

(51) Int Cl.:
***G09G 3/288*** *(2006.01)*

(21) Application number: **08250821.9**

(22) Date of filing: **11.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.08.2007 JP 2007205710**

(71) Applicant: **Hitachi, Ltd.**
**Chiyoda-ku**
**Tokyo 100-8280 (JP)**

(72) Inventors:
• **Takeuchi, Masanori,**
**c/o Hitachi Ltd.**
**Chiyoda-ku**
**Tokyo 100-8220 (JP)**
• **Hashimoto, Yasunobu,**
**c/o Hitachi Ltd.**
**Chiyoda-ku**
**Tokyo 100-8220 (JP)**

• **Ohki, Hideaki,**
**c/o Hitachi Ltd.**
**Chiyoda-ku**
**Tokyo 100-8220 (JP)**
• **Kimura, Yuichiro,**
**c/o Hitachi Ltd.**
**Chiyoda-ku**
**Tokyo 100-8220 (JP)**
• **Itokawa, Naoki,**
**c/o Hitachi Ltd.**
**Chiyoda-ku**
**Tokyo 100-8220 (JP)**
• **Nuguchi, Yasuji,**
**c/o Hitachi Ltd.**
**Chiyoda-ku**
**Tokyo 100-8220 (JP)**

(74) Representative: **Hackney, Nigel John et al**
**Mewburn Ellis LLP**
**33 Gutter Lane**
**London**
**EC2V 8AS (GB)**

(54) **Plasma diaplay apparatus and plasma display panel driving method**

(57) A disclosed plasma display apparatus and a plasma display panel driving method provide improved luminance while preventing decrease in resolution. In the plasma display apparatus, which is adapted to the display of an interlace signal, the maximum number of sustain pulses associated with the emission of light that can be made in one field is calculated, based on the vertical synchronization signal frequency of the input signal. A display load factor of the input signal in the one field is calculated and, based on the calculated display load factor, a target number of sustain pulses in the one field is determined. Based on a relationship between the target number of sustain pulses and the maximum number of sustain pulses, an emission luminance ratio of a sub-display line to a main-display line in the one field is determined.

FIG.1

**Description**

The present invention relates to plasma display apparatuses and methods of driving a plasma display panel. Particularly, the invention relates to a plasma display apparatus and a method of driving a plasma display panel whereby one line of data of an interlaced input signal is displayed by a pair of a main-display line and an adjacent sub-display line simultaneously.

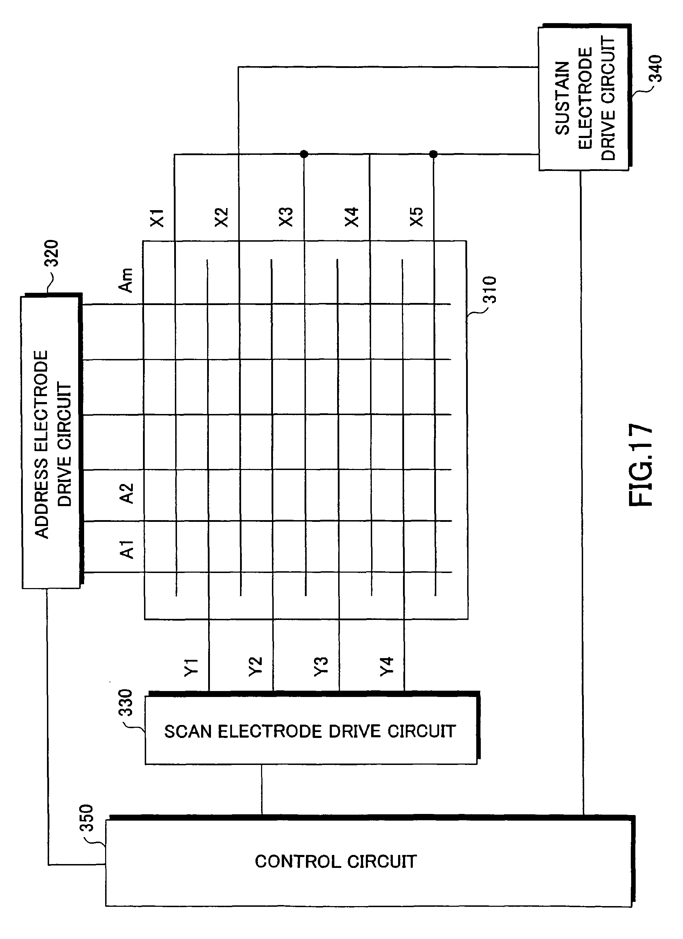

FIG. 17 shows a circuit block diagram of a conventional plasma display apparatus (hereafter also referred to as a "PDP apparatus") of the ALIS (Alternate Lighting of Surfaces) type. As shown, a plasma display panel 310 comprises plural X electrodes (X1,X2,X3,...,X5) and Y electrodes (Y1,Y2,Y3,...,Y4) that are disposed adjacent to each other, and plural address electrodes (A1,A2,A3,...,Am) disposed to intersect the X and Y electrodes. At the intersections of these electrodes, phosphors are disposed, and a discharge gas is contained between two substrates. An address electrode drive circuit 320 applies an address pulse to the address electrodes. A scan electrode drive circuit 330 applies a scan pulse to the Y electrodes sequentially while it also applies a sustained discharge pulse ("sustain pulse") thereto. A sustain electrode drive circuit 340 applies a sustain pulse to the X electrodes. A control circuit 350 controls the individual units.

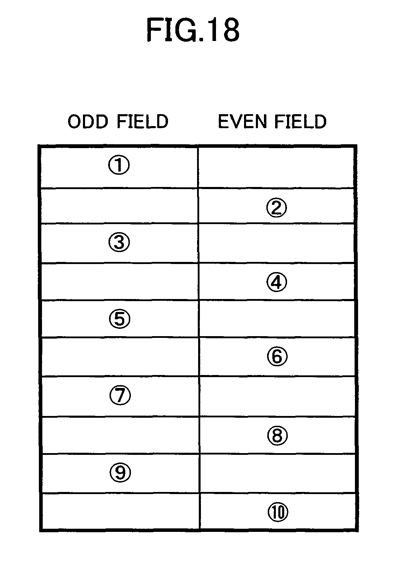

FIG. 18 shows display lines of the conventional ALIS-type PDP apparatus. As mentioned above, the ALIS-type PDP apparatus displays an image by the interlace method as is widely used in TV receivers, whereby in an odd field, odd-numbered display lines 1,3,5, ... are displayed, while in an even field, even-numbered display lines 2,4,6, ... are displayed. Namely, in the odd field, the (2N-1)th (N is an integer of 1 or greater) display line is displayed, while in the even field, the 2N-th display line is displayed. In order to obtain 2N display lines in the ALIS-type PDP apparatus, 2N+1 X electrodes and 2N Y electrodes are formed. Since the X electrodes and the Y electrodes have the same shape, and sustained discharge takes place between them to emit light for a display, the X electrodes and the Y electrodes are herein referred to as the display electrodes.

Examples of the ALIS-type PDP apparatus include the box-type PDP apparatus (also referred to as a dot matrix-type PDP apparatus), in which individual display cells are separated by lattice-shaped partition walls, and the stripe-type PDP apparatus, which has simple linear partition walls. In the box-type PDP, since the discharge does not extend beyond the region of each display cell separated by the partition walls, the drive voltage applied between the display electrodes can be increased, thus facilitating circuit design and improving emission efficiency. Furthermore, the box-type PDP is capable of performing a display not just by the interlace system but also the progressive system, whereby all of the display lines are simultaneously displayed.

However, in the box-type PDP, the light emitting area is reduced by the limited discharge region due to the separation of the individual display cells by the partition walls. Thus, the conventional ALIS-type PDP, when driven by the interlace method, has the problem of a decrease in luminance.

In order to overcome this problem of reduced luminance, a technology has been proposed which takes advantage of the fact that, when an interlace signal is displayed, there is no displayed information in a non-displaying line in either the odd-numbered field or the even-numbered field. Specifically, the technology causes one line of data to be written and displayed over two lines simultaneously, thus rendering an interlace display into a non-interlace display (see Japanese Laid-Open Patent Application No. 10-133621, for example). By applying this technology to the driving of the box-type PDP, the effective display region and hence luminance can be increased. When applying the technology to the driving of the box-type PDP, by applying the same voltage to X electrodes on both sides of a Y electrode (scan electrode), the same data can be readily written in the display cells on both sides of the Y electrode. In this way, the same display data is displayed on the two display lines on both sides of each Y electrode in both the odd field and the even field.

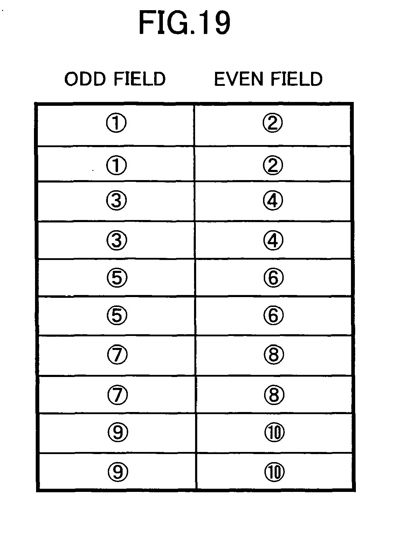

FIG. 19 shows display lines in a case where the aforementioned technology disclosed in Japanese Laid-Open Patent Application No. 10-133621 is applied to the driving of the box-type PDP. In the odd field, the (2N-1)th data is displayed on the (2N-1)th and the 2N-th display lines, while in the even field, the 2N-th data is displayed on the (2N-1)th and the 2N-th display lines. Thus, the (2N-1)th data and the 2N-th data are displayed at the same position.

However, the (2N-1)th data and the 2N-th data are originally supposed to be displayed on alternating lines so that no decrease in frame resolution is caused. When the odd-numbered and even-numbered data are displayed as shown in FIG. 19, the center of gravity of display of the different pieces of information is aligned between the odd field and the even field, thus decreasing the frame resolution by one half.

In order to overcome the aforementioned problem of decrease in frame resolution (vertical resolution), Japanese Laid-Open Patent Application No. 2003-233346 discloses a technology whereby the center of gravity of display on two lines is displaced between the odd field and the even field. This technology reduces the decrease in vertical resolution and allows to maintain the luminance of the display lines by the PDP shown in FIG. 19.

However, this publication teaches that the two lines simultaneously emit light with the same luminance. While this offers an improvement over Japanese Laid-Open Patent Application No. 10-133621, there still remains the problem of a decrease in vertical resolution.

Preferably therefore, it is a general object of the invention to overcome the aforementioned problems. Preferably, a more specific object of the invention is to provide a plasma display apparatus and a method of driving a plasma display panel whereby luminance can be maximized optimally while preventing a decrease in vertical resolution.

In one aspect, the invention provides a plasma display apparatus comprising a display panel having plural display lines and being configured to be driven by a sub-field method; a drive circuit configured to drive the display panel so as to display one line of data of an interlaced input signal by a pair of a main-display line and an adjacent sub-display line simultaneously; a maximum sustain pulse number calculating unit configured to calculate the maximum number of sustain pulses associated with the emission of light that can be made within one field corresponding to the main-display line, based on the vertical synchronization signal frequency of the input signal; a display load factor calculating unit configured to calculate a display load factor of the input signal in the one field; a target sustain pulse number determining unit configured to determine a target number of sustain pulses for the one field, based on the display load factor calculated by the display load factor calculating unit; and an emission luminance ratio determining unit configured to determine, based on a relationship between the target number of sustain pulses determined by the target sustain pulse number determining unit and the maximum number of sustain pulses, an emission luminance ratio of the sub-display line to the main-display line in the one field.

Thus, the emission luminance ratio of the sub-display line to the main-display line can be appropriately determined for each field of an interlaced input signal. As a result, the decrease in vertical resolution can be prevented while luminance can be improved by displaying the same data on two lines.

In an embodiment, the emission luminance ratio determining unit is configured to make the emission luminance ratio greater than zero when the target number of sustain pulses is greater than the maximum number of sustain pulses.

Thus, the two-line display can be made by emitting the sub-display line when the emission luminance for the one field is lacking, whereby the lack of emission luminance by the main display line alone can be compensated for by the emission of the sub-display line.

In another embodiment, the emission luminance ratio is the ratio of a value obtained by subtracting the maximum number of sustain pulses from the target number of sustain pulses, to the maximum number of sustain pulses.

Thus, an appropriate emission luminance can be obtained by only compensating for the lack of emission luminance by the main display line with respect to the target sustain pulse number.

In another embodiment, the emission luminance ratio determining unit makes the emission luminance ratio zero when the target number of sustain pulses is not greater than the maximum number of sustain pulses.

Thus, the main display line alone is caused to emit light when the target emission luminance can be obtained with the main display line alone, so that an appropriate emission luminance can be obtained without causing a drop in vertical resolution.

In another embodiment, the maximum value that the target number of sustain pulses can take is approximately twice the maximum number of sustain pulses.

Thus, the range of the target sustain pulse number can be set to correspond to the range of luminance that can be covered by the two display lines.

In yet another embodiment, the apparatus further comprises a temperature monitoring unit configured to monitor the temperature of the display panel or a circuit component. The emission luminance ratio determining unit makes the emission luminance ratio zero when the temperature monitoring unit detects that the temperature exceeds a predetermined temperature.

Thus, if the temperature of the display panel or the like increases due to the concentration of sustained discharge in particular cells when the display load ratio is small, for example, the emission of the sub-display line can be ceased, thereby preveting temperature increases.

In another embodiment, when the rate of change of the display load factor between a previous field and the one field exceeds a predetermined maximum load change rate, the emission luminance ratio determining unit causes the emission luminance ratio to vary over plural fields within the range of the predetermined maximum load change rate.

Thus, it becomes possible to prevent the phenomenon in which image appears to be moving to the human eye due to a sharp movement in the emission center of gravity when the emission luminance ratio is determined based on a display load ratio that sharply changes.

In a further embodiment, the apparatus further comprises a sustain pulse number allocating unit configured to allocate a certain number of sustain pulses to the sub-display line in plural sub-fields of the one field, based on the emission luminance ratio of the sub-display line to the main-display line in the one field.

Thus, the emission luminance ratio calculated on a field by field basis can be reflected in each sub-field, whereby an appropriate emission luminance can be realized while preventing the decrease in vertical resolution during actual driving of the display panel.

In yet another embodiment, the sustain pulse allocating unit is configured to allocate a predetermined number of sustain pulses which is not based on the luminance ratio to a sub-field having a weight smaller than the predetermined weight.

Thus, the gray level change rate in a low-gray level portion can be reduced, so that an improved gray level representing property can be obtained which is attuned to the human eye, which is the more sensitive to a difference in luminance of gray levels the smaller the luminance.

In another embodiment, the predetermined number of sustain pulses is zero.

Thus, the gray level change rate can be minimized in a low gray level portion, whereby a further enhanced gray level representing property can be obtained which is attuned to the human eye, which is the more sensitive to a difference in luminance of gray levels the smaller the luminance.

In another embodiment, the apparatus further comprises a non-linear circuit configured to non-linearly convert a first image signal based on the input signal to a second image signal, and to represent the second image signal in terms of an integer portion and an error portion; and an error diffusion circuit configured to diffuse the error portion spatially or temporally when the error portion is not zero.

Thus, gray levels that appear to smoothly change to the human eye can be obtained.

In a further embodiment, depending on whether the one field is an odd field or an even field, the combination of the main-display line and the sub-display line is changed so that the center of gravity of display is displaced.

Thus, the decrease in resolution can be further prevented, whereby an appropriate emission luminance can be realized while maintaining resolution.

In another aspect, the invention provides a method of driving a plasma display panel having plural display lines, wherein one line of data of an interlaced input signal is displayed by a pair of a main-display line and an adjacent sub-display line simultaneously. The method comprises the steps of calculating the maximum number of sustain pulses that are associated with the emission of light that can be made within one field, based on the vertical synchronization signal frequency of the input signal; calculating a display load factor of the input signal of the one field; determining a target number of sustain pulses in the one field based on the display load factor; and determining an emission luminance ratio of the sub-display line to the main-display line in the one field, based on a relationship between the target number of sustain pulses and the maximum number of sustain pulses.

Thus, the emission luminance ratio of the sub-display line to the main-display line can be appropriately determined for each field of an interlaced input signal. As a result, the decrease in vertical resolution can be prevented while luminance can be improved by displaying the same data on two lines.

In an embodiment, the method further comprises the step of allocating, based on the emission luminance ratio of the sub-display line to the main-display line in the one field, a certain number of sustain pulses to the sub-display line in plural sub-fields of the one field.

Thus, the emission luminance ratio calculated on a field by field basis can be reflected on each sub-field, whereby an appropriate emission luminance can be realized while preventing the decrease in vertical resolution during an actual driving of the display panel.

In accordance with the present invention, an image based on an interlace signal can be displayed with an appropriate luminance while maintaining a necessary vertical resolution.

BRIEF DESCRIPTION OF THE DRAWINGS

These and other objects, features and advantages of the invention will be apparent to those skilled in the art from the following detailed description of the invention, when read in conjunction with the accompanying drawings, in which:

FIG. 1 shows a circuit block diagram of a plasma display apparatus according to Embodiment 1;
FIG. 2 shows a flow chart of a process performed by the plasma display apparatus of Embodiment 1;
FIG. 3 shows a relationship between a display load factor and luminance;
FIG. 4 shows an emission luminance ratio R as regards a pair of a main-display line P and of a sub-display line;
FIG. 5 is a drawing for describing an embodiment in which no gray level correction is performed;
FIG. 6 is a drawing for describing an embodiment in which a gray level correction is performed;
FIG. 7 shows display lines in which the center of gravity of display is displaced between an odd field and an even field;
FIG. 8 shows an example of a circuit block diagram for realizing Embodiment 1;
FIG. 9A shows a connection state between a scan electrode switch 105 and a sustain electrode switch 115 in an odd field;
FIG. 9B shows a connection state between the scan electrode switch 105 and the sustain electrode switch 115 in an even field;
FIG. 10 shows a block diagram of a PDP apparatus according to a different embodiment from FIG. 8;
FIG. 11 shows a block diagram of a plasma display apparatus according to Embodiment 2;
FIG. 12 shows non-linear characteristics in a case of a small load;
FIG. 13A shows the signal characteristics of an input video signal;
FIG. 13B shows the transform characteristics of an inverse-γ-transform circuit 30;

FIG. 13C shows the signal characteristics of an output video signal of the inverse-γ-transform circuit 30;

FIG. 14 shows an example of a non-linear-gain circuit 22;

FIG. 15 illustrates an error diffusion process performed in an error diffusion circuit 23;

FIG. 16 shows a block diagram of an example of the error diffusion circuit 23;

FIG. 17 shows a circuit block diagram of a conventional ALIS-type PDP apparatus;

FIG. 18 shows display lines in the conventional ALIS-type PDP apparatus; and

FIG. 19 shows display lines of a conventional box-type PDP.

## DETAILED DESCRIPTION OF THE PREFERRED EMBODIMENTS

In the following, preferred embodiments of the invention are described with reference to the drawings.

## Embodiment 1

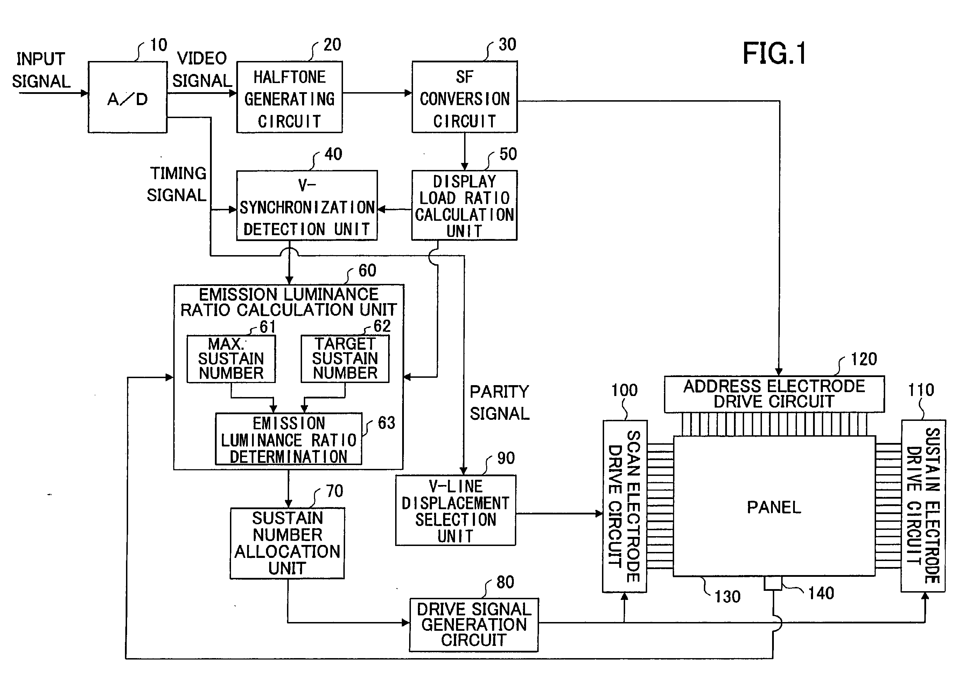

FIG. 1 shows a circuit block diagram of a plasma display apparatus according to Embodiment 1 of the invention. The plasma display apparatus comprises an A/D converter 10; a halftone generating circuit 20; an SF (sub-field) conversion circuit 30; a vertical synchronization detecting unit 40; a display load factor calculating unit 50; an emission luminance ratio calculating unit 60; a sustain pulse number allocating unit 70; a drive signal generating circuit 80; a vertical synchronization one-line-displacement selecting switch 90; a scan electrode drive circuit 100; a sustain electrode drive circuit 110; an address electrode drive circuit 120; a display panel 130; and a temperature monitoring unit 140.

The A/D converter 10 receives an analog input signal adapted to the interlace method and converts it into a digital signal. Among the digital signals output by the A/D converter 10, a video signal is sent to the halftone generating circuit 20, while timing signals such as a vertical synchronization signal, a horizontal synchronization signal, and a clock signal are sent to the vertical synchronization detecting unit 40.

The halftone generating circuit 20 is a circuit to generate halftones by error diffusion or a dither process so that a video input signal can be displayed in limited, predetermined lighting patterns so as to reduce the pseudo-contour of a moving image. A signal output by the halftone generating circuit 20 is sent to the SF conversion circuit 30.

The SF conversion circuit 30 is a signal conversion circuit to drive the display panel 130 by the sub-field method whereby, upon reception of an input signal in units of odd fields or even fields, a single field is divided into plural sub-fields for gray level representation. A sub-field signal output by the SF conversion circuit 30 is sent to the address electrode drive circuit 120, which drives an address electrode in the display panel 130 in accordance with a predetermined timing. The sub-field signal is also delivered to the display load factor calculating unit 50.

The vertical synchronization detecting unit 40 is configured to detect the frequency of the vertical synchronization signal based on a timing signal in the input signal. The vertical synchronization signal may be determined to be 60 Hz in Japan and 50 Hz in Europe by the NTSC standard. However, since the vertical synchronization signal frequency of the input signal may fluctuate somewhat depending on the reception position of the plasma display apparatus or temperature, for example, an accurate vertical synchronization signal frequency of the input signal is detected. The vertical synchronization signal frequency of the input signal detected by the vertical synchronization detecting unit 40 is sent to the emission luminance ratio calculating unit 60.

The display load factor calculating unit 50 is configured to calculate the display load factor of an input video signal on a field by field basis, in percentages relative to a display load of 100 when all of the pixels of the display panel 130 are lighted with the maximum luminance. Namely, if the delivered field image is generally bright, it has a high display load factor, while a darker image has a smaller display load factor.

The display load factor calculating unit 50 is disposed in a stage subsequent to the SF conversion circuit 30. Therefore, the display load factor for each sub-field may be calculated and a sum of the obtained values may be calculated as the display load factor for one field. The display load factor of one field calculated by the display load factor calculating unit is delivered to the emission luminance ratio calculating unit 60.

The vertical synchronization detecting unit 40 and the display load factor calculating unit 50 may be constructed either in the form of circuits or arithmetic processing units such as a microcomputer.

The emission luminance ratio calculating unit 60 is an arithmetic processing unit for determining an emission luminance ratio of a sub-display line to a main-display line of the display lines of the display panel 130. It may be realized by a computing unit such as a microcomputer or a circuit. The "main-display line" and the "sub-display line" herein refer to display lines, one disposed adjacently above the other, where the difference is determined by whether the input signal of the interlace system is of an odd field or an even field. For example, in the case of an odd field, an odd-numbered display line becomes a main-display line and an even-numbered display line becomes a sub-display line. Similarly, in the case of an even-field input signal, an even-numbered display line becomes a main-display line and an odd-numbered display line becomes a sub-display line.

The emission luminance ratio calculating unit 60 includes a maximum sustain pulse number calculating unit 61; a target sustain pulse number determining unit 62; and an emission luminance ratio determining unit 63. These may be each constructed either in the form of a circuit or an arithmetic processing unit such as a microcomputer.

The maximum sustain pulse number calculating unit 61 is configured to calculate the maximum number of sustain pulses associated with the emission of light that can be made within one field, based on the vertical synchronization frequency of the input signal that is detected by the vertical synchronization detecting unit 40. If one knows the vertical synchronization frequency of the input signal, one knows the period of one field of the input signal. Since the number of sub-fields in one field and various periods within a sub-field, such as the reset period, the address period, and the sustain period, are predetermined, the sustain period of one field is automatically determined by the period of one field. Therefore, the number of sustained emissions, i.e., the number of sustain pulses, that can be produced within one field can be calculated by dividing the sustain period of one field by the period required for a single sustained discharge. Such calculation is performed by the maximum sustain pulse number calculating unit 61.

The target sustain pulse number determining unit 62 is configured to determine a target number of sustain pulses based on the display load factor calculated by the display load factor calculating unit 50. More specifically, the target number of sustain pulses is calculated by referring to a predetermined table or a relationship formula describing the relationship between display load factor and target luminance. The plasma display apparatus according to the present embodiment can be suitably applied to the box-type of the partition walls of the cells of the display panel 130. In the case of the box-type cells, depending on the magnitude of the display load factor, a target luminance may not be reached by the maximum number of sustain pulses. Thus, a target number of sustain pulses is determined with a view to determining whether such a state exists.

The emission luminance ratio determining unit 63 is an arithmetic processing unit for calculating and determining an emission luminance ratio of the sub-display lines relative to the main-display lines in one field, based on the maximum number of sustain pulses determined by the maximum sustain pulse calculating unit 61 and by the target number of sustain pulses determined by the target sustain pulse number determining unit 62. While the main-display lines basically display an entire image to be displayed in accordance with the input signal, the sub-display lines emit light in accordance with the emission luminance ratio determined by the emission luminance ratio determining unit 63. In this way, emission luminance can be maximized without a decrease in resolution.

Specific calculations and processes performed in the emission luminance ratio calculating unit 60 are described later.

The sustain pulse number allocating unit 70 is configured to allocate a certain number of sustain pulses to each sub-field based on the emission luminance ratio of the sub-display lines relative to the main-display lines in one field, which ratio is determined by the emission luminance ratio determining unit 63 of the emission luminance ratio calculating unit 60. Since the display panel 130 comprising a plasma display panel is driven by the sub-field method to perform light-emitting display, the emission luminance ratio for one field determined by the emission luminance ratio calculating unit 60 is transformed for the sub-field method so that it can be reflected in the driving of the display panel 130. The sustain pulse number allocating unit 70 may be constructed in the form of either a computing unit such as a microcomputer or a circuit.

The drive signal generating circuit 80 is a circuit for generating signals for driving the scan electrode drive circuit 100 and the sustain electrode drive circuit 110 in accordance with the signal for the main-display line and the auxiliary, sub-field signal for the sub-display line, which are allocated by the sustain pulse number allocating unit 70 on a sub-field basis.

The vertical synchronization one-line-displacement selecting switch 90 is configured to select a mode in which, with regard to input signals for an odd field and an even field, the individual fields are allocated with different, rather than the same, pairs of upper and lower display lines. For example, when the first display line and the second display line make a pair for an odd-field input signal, another pair is made for the even-field input signal not of the first and the second but the second and the third display lines, thus making the pairs of different display lines between the odd field and the even field.

The address electrode drive circuit 120 is a circuit for driving the address electrodes for address emission so as to make an address selection as to which cell is to be caused to emit light during an address period.

The display panel 130 is a plasma display panel on which plural horizontal display lines are disposed. The plasma display apparatus of the present embodiment is compatible with an input signal of the interlace system. Specifically, for an odd-field input signal, the same data can be displayed by a pair of a main-display line, i.e., an odd-numbered display line, and an adjacent even-numbered display line. Similarly, for an even-field input signal, the same data can be displayed by a pair of a main-display line, i.e., an even-numbered display line, and a sub-display line, i.e., an odd-numbered display line.

The plasma display apparatus of the present embodiment is particularly suitable for a plasma display panel having the box-type cells. The apparatus, however, may also be applied to a plasma display panel having the stripe-type cells. Therefore, the display panel 130 may comprise either a box-type plasma display panel or a stripe-type plasma display panel.

The temperature monitoring unit 140 is configured to monitor the temperature of circuit components within the display panel 130 or the plasma display apparatus. Upon detection of a temperature exceeding a predetermined value, the temperature monitoring unit 140 sends an instruction signal to the emission luminance ratio calculating unit 60, so as to make the emission luminance ratio, as determined by the emission luminance ratio determining unit 63, zero. Thereby, the light emission by the sub-display lines can be halted when the temperature of the display panel 130 or the like is high, thus protecting various components or the display panel 130 from damage due to high temperature.

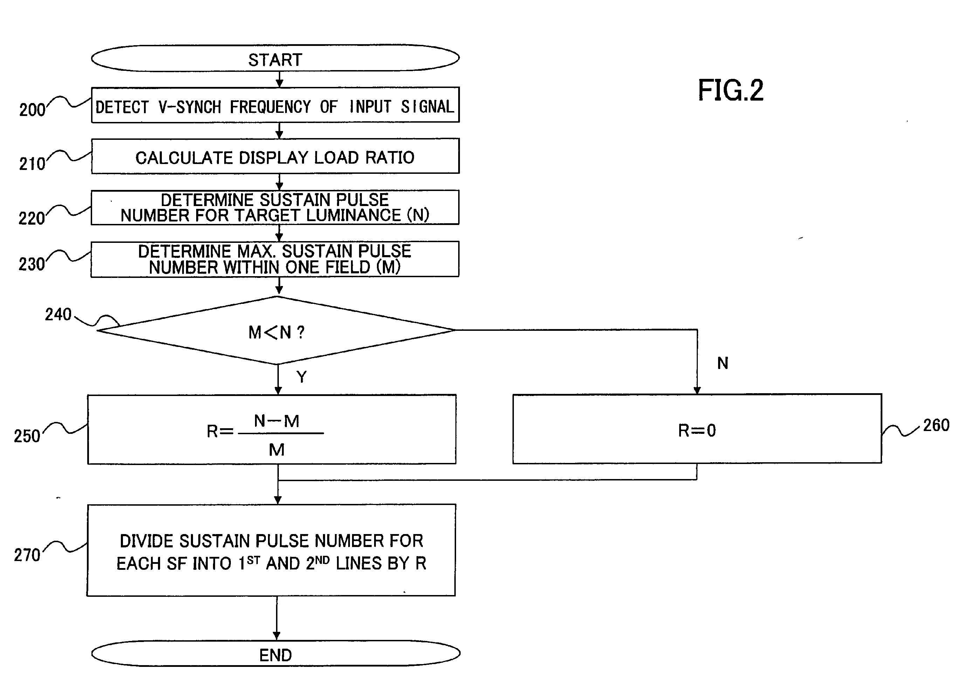

FIG. 2 shows a process flow chart for describing the flow of a computation process carried out by the vertical synchronization detecting unit 40, the display load factor calculating unit 50, the emission luminance ratio calculating unit 60, and the sustain pulse number allocating unit 70 according to the present embodiment. Constituent elements that have been described with reference to FIG. 1 are referenced by the same reference numerals and their description is omitted.

Referring to FIG. 2, in step 200, the vertical synchronization frequency detection unit 40 detects the vertical synchronization frequency of the input signal. The vertical synchronization frequency detection may be performed by counting the vertical synchronization signal pulses in the input signal.

In step 210, the display load factor calculating unit 50 calculates the display load factor of one field. The display load factor may be calculated as the ratio of light emission from the display panel relative to the value obtained when all of the pixels of the main-display lines used for the display of one field emit light with the maximum luminance. For example, when half of the main-display lines on the display panel 130 is pure white (the maximum luminance) and the remaining half is pure black (luminance 0), the display load factor is 50%. When all of the pixels of the main-display lines on the display panel 130 are emitting gray with the luminance of 50%, the display load factor is also 50%.

In step 220, based on the display load factor for one field calculated in step 210, a target number of sustain pulses N that realizes a target luminance is determined by the target sustain pulse number determining unit 62 of the emission luminance ratio calculating unit 60.

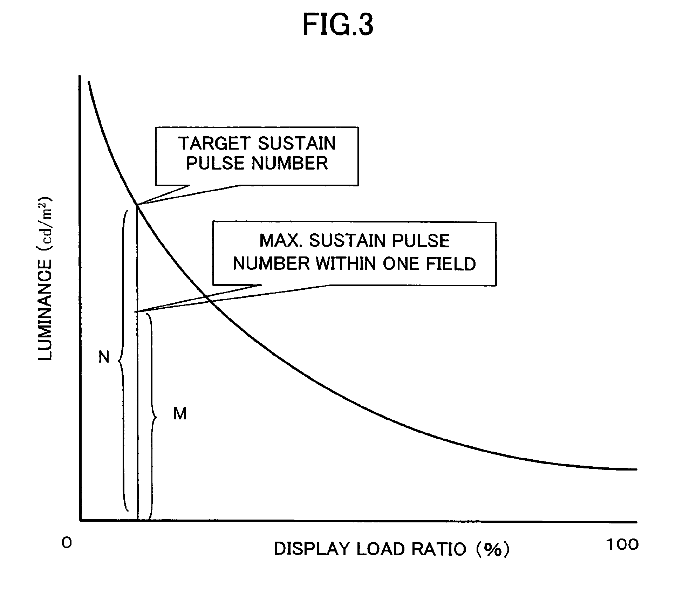

FIG. 3 shows a relationship between display load factor and luminance. The target number of sustain pulses N may be determined with reference to such a characteristics curve or a table having such a predetermined relationship. The characteristics curve shown in FIG. 3 shows the display load factor (%) on the horizontal axis and the luminance ($cd/m^2$) on the vertical axis. As a whole, the curve shows target luminance characteristics that can be realized relative to the display load factor. In FIG. 3, since the display load factor and the luminance have a one-to-one correspondence on the characteristics curve, a target luminance and a target number of sustain pulses N can be automatically determined once the display load factor is determined. In the plasma display apparatus, luminance is determined by the number of times of sustained emission, i.e., the number of sustain pulses. Therefore, the target number of sustain pulses N is simultaneously determined once the target luminance is determined. Thus, in the target sustain pulse number determining unit 62, a computation processing is performed to determine the target number of sustain pulses N based on the display load factor.

Referring back to the process flow of FIG. 2, after the target number of sustain pulses for realizing the target luminance is determined in step 220, the routine proceeds to step 230.

In step 230, in the maximum sustain pulse number calculating unit 61 of the emission luminance ratio calculating unit 60, the maximum number of sustain pulses M that can be placed within one field is calculated. In the plasma display apparatus, since a minimum required reset period and an address period for each sub-field are determined, the maximum sustain period can be calculated once the period of one field is determined. Further, while there is a discharge period in the sustain period that is required for stabilizing the sustained discharge, by excluding all such discharge periods from the period of one field, the sustain period that can be utilized purely for image display purposes can be calculated. Also, with regard to the sustained discharge, the time required for a single light-emitting discharge is determined, so that the number of times of sustained emission, i.e., the maximum number of sustain pulses M that can be placed within one field, can be calculated once the sustain period within one field is known.

Thus, in step 230, the maximum sustain pulse number calculating unit 61 calculates the maximum number of sustain pulses M that can be placed within one field, based on the vertical synchronization frequency of the input signal detected in step 200.

Then, in step 240, in the emission luminance ratio determining unit 63 of the emission luminance ratio calculating unit 60, it is determined whether the target number of sustain pulses N is greater than the maximum number of sustain pulses M. In the plasma display apparatus of the present embodiment, subsequent processes differ depending on whether the target number of sustain pulses N within one field exceeds the maximum number of sustain pulses. Therefore, in step 240, the target number of sustain pulses N and the maximum sustain pulse number M are compared.

Referring back to FIG. 3, the specific contents of step 240 are described. As mentioned above, the maximum number of sustain pulses M that can be placed within one field can be uniquely determined by the vertical synchronization frequency of the input signal. However, in the plasma display apparatus, since luminance is determined by the number of times of light emission, the maximum number of sustain pulses M means the maximum luminance that can be represented by the main-display lines in one field. Thus, as shown in FIG. 3, the maximum number of sustain pulses M that can be placed within one field can be expressed on the same dimension as the target number of sustain pulses and can be used as a reference value for the latter.

FIG. 3 illustrates a case where the target number of sustain pulses N is greater than the maximum number of sustain pulses M. This means that the luminance that can be represented by the main-display lines in one field of the plasma display apparatus is below the luminance required for reproducing an image of the field. Conversely, it means that the required luminance can be represented by the main-display lines in the plasma display apparatus as long as the target number of sustain pulses N is not more than the maximum number of sustain pulses M.

In view of such a relationship, in the plasma display apparatus of the present embodiment, when the target number of sustain pulses N is greater than the maximum number of sustain pulses M, the lacking number of sustain pulses, i.e., N-M, is compensated for by the sub-display lines. When the target number of sustain pulses N is not more than the maximum number of sustain pulses M, the relevant image is displayed by the main-display lines alone. The maximum value of the target number of sustain pulses N is obtained when the display load factor has a value extremely close to zero, and that is twice the maximum number of sustain pulses M, or 2M. This is because the maximum number of sustain pulses for the sub-display lines is also M, so that the maximum value of the target number of sustain pulses N inevitably becomes 2M.

Referring back to FIG. 2, the above control is described in detail. In step 240, the target number of sustain pulses N and the maximum number of sustain pulses M are compared with each other. If the target number of sustain pulses N is greater than the maximum number of sustain pulses M, the routine proceeds to step 250. If the target number of sustain pulses N is not more than the maximum number of sustain pulses M, the routine proceeds to step 260.

In step 250, the emission luminance ratio calculating unit 63 calculates and determines the emission luminance ratio R of the sub-display lines relative to the main-display lines. Specifically, the emission luminance ratio R is calculated as the proportion of a value (N-M), i.e., the target number of sustain pulses N minus the maximum number of sustain pulses M, relative to the maximum number of sustain pulses M. Namely, R is determined by:

$$R = \frac{N-M}{M} \qquad\qquad (1)$$

The emission luminance ratio R calculated by Equation (1) has a value indicating the proportion of the lack of the maximum luminance relative to the target luminance, with reference to the maximum luminance that can be expressed by the main-display lines in one frame. Thus, depending on the magnitude of the lack of the maximum number of sustain pulses M relative to the target number of sustain pulses N, the emission luminance ratio R of the sub-display lines is adjusted. As mentioned above, the maximum value of the target number of sustain pulses N = 2M, and since (N-M)≤M, the emission luminance ratio R remains within the range of 0<R≤1, thus taking a value greater than zero.

Thus, when the maximum number of sustain pulses M is smaller than the target number of sustain pulses N, the emission luminance ratio R of the sub-display lines is increased depending on the magnitude of the lack (N-M). In this way, an optimum luminance can be obtained without causing too much decrease in the vertical resolution of the display panel 130.

In step 260, a control is performed whereby the emission luminance ratio R is determined to be zero. In step 260, since the target number of sustain pulses N is not more than the maximum number of sustain pulses M, a luminance required for one frame can be obtained with the main-display lines alone. Thus, in this case, there is no need to enhance luminance with the sub-display lines. Therefore, the emission luminance ratio R is made zero, and an image display is performed with only the main-display lines that are originally adapted to the input signal of the interlace system. Thus, the required luminance can be satisfied by the main-display lines alone, and the unnecessary sub-display lines are not lighted, thus preventing a decrease in vertical resolution.

As described above, in the plasma display apparatus of the present embodiment, as described with reference to steps 240 to 260, the display of an interlace signal can be controlled such that an optimum luminance can be obtained without a decrease in vertical resolution, based on the magnitude relationship between the target number of sustain pulses N and the maximum number of sustain pulses M for one frame.

During the computation processing in steps 240 to 260, if the temperature monitoring unit 140 detects that the temperature of the display panel 130 or any of the other circuit components is above a predetermined temperature, the emission luminance ratio R may be controlled to have a zero value regardless of the process flow of FIG. 2. In this way, priority can be given to the avoidance of dangerous conditions such as where the circuit components or the display panel 130 has an increased temperature, so that damage to the circuit components or the display panel 130 due to high temperature can be avoided.

If the emission luminance ratio R varies sharply between fields, such as from zero to one, the center of gravity of light emission of adjacent two lines, one above the other, may be displaced by a half pixel, making it look to the human eyes as if the image is moving. Thus, an upper limit may be provided to the width of any single variation of the emission luminance ratio R, so that, if the display load factor changes greatly, the emission luminance ratio R can be controlled to vary gradually over plural fields. For example, when the width of a single variation of the emission luminance ratio R is set to be 0.25, the emission luminance ratio R can be caused to vary over four fields even if the display load factor changes to such an extent that the emission luminance ratio R varies from zero to one, thus realizing a smooth image variation.

In step 270, the sustain pulse number allocating unit 70 allocates certain numbers of sustain pulses to the main-display line and the sub-display line for each sub-field, depending on the emission luminance ratio R. In the plasma display apparatus of the present embodiment, gray level representation and the driving of the display panel 130 are performed by the sub-field method, whereby one field is divided into plural sub-fields and gray level representation is performed with a predetermined luminance ratio for each sub-field. Therefore, it is necessary to allocate certain numbers of sustain pulses to the main-display line and the sub-display line in each sub-field. Thus, in step 270, depending on the emission luminance ratio R determined in step 250 or step 260 for one field, certain numbers of sustain pulses are allocated to the main-display line and the sub-display line.

For example, when the maximum number of sustain pulses M is allocated to the main-display lines in one field, the number of sustain pulses RM=(N-M) is allocated to the sub-display line. Namely, the sustain pulses are allocated at the same ratio of the sub-display lines to the main-display lines such that R(0≤R≤1), in each sub-field. When R=0, the number of sustain pulses allocated to the sub-display line is zero, so that, eventually, no sustain pulse number is allocated.

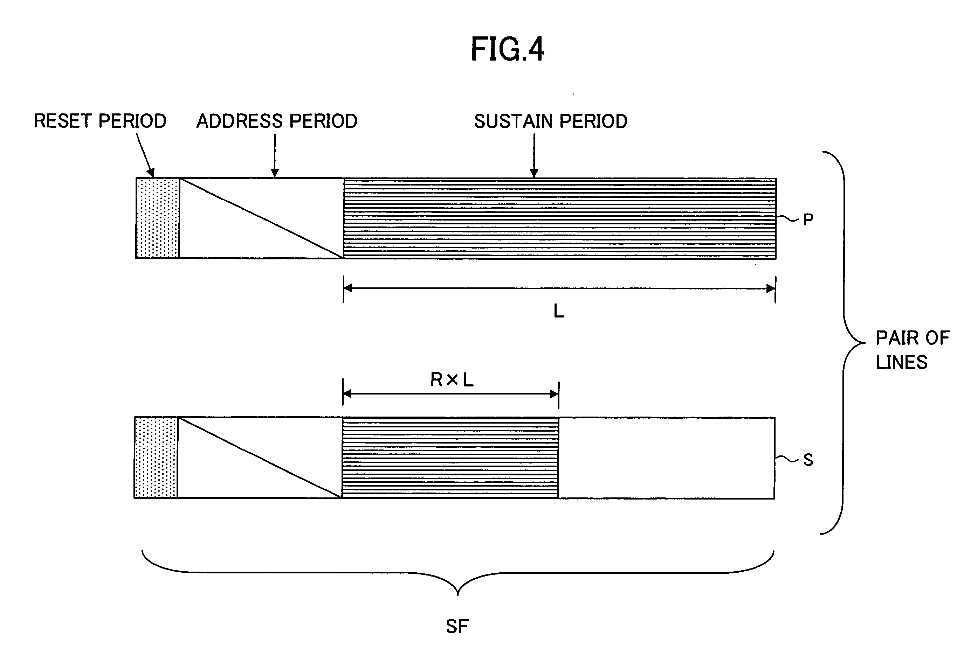

FIG. 4 illustrates an emission luminance ratio R for a pair of the main-display line P and the sub-display line in one sub-field. Both the main-display line P and the sub-display line S each have a reset period, an address period, and a sustain period, of which the lengths are the same in the single sub-field. The main-display line P has a luminance L in the sustain period, while the sub-display line S has a luminance $R \times L$ in the sustain period, which is smaller than that of the main-display line P. Namely, since luminance is synonymous with an emitting period, when the main-display line P has the emitting period length L in the sustain period, the sub-display line S has the emitting period which is the product of the emission luminance ratio R and L, so that the emitting period is controlled to be shorter than that of the main-display line P. Since the period required for sustained discharge is the same for both the main-display line P and the sub-display line S, the difference in sustain period means the same thing as the difference in the number of sustain pulses. Therefore, when the maximum number of sustain pulses M is allocated to the main-display line P, a certain number of sustain pulses RM is allocated to the sub-display line S, in accordance with Equation (1). In the sustain pulse number allocating unit 70, a certain number of sustain pulses is allocated to each sub-field in one field in accordance with the luminance ratio R as shown in the example of FIG. 4.

Thus, in step 270 of FIG. 2, based on the emission luminance ratio R that is determined with regard to one field, a certain number of sustain pulses is allocated to each sub-field, whereby the display control according to the present interlace system can be applied to the display panel 130 which is driven by the sub-field method. At the end of step 270 in FIG. 2, the emission luminance ratio calculation process flow is completed and the same process is repeated for the input signal on a frame by frame basis.

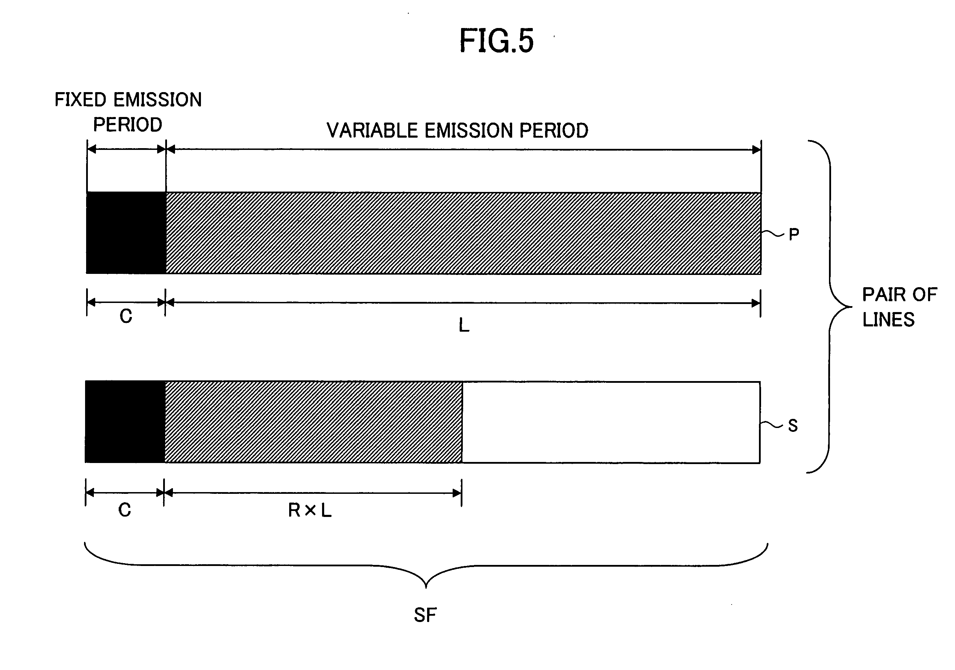

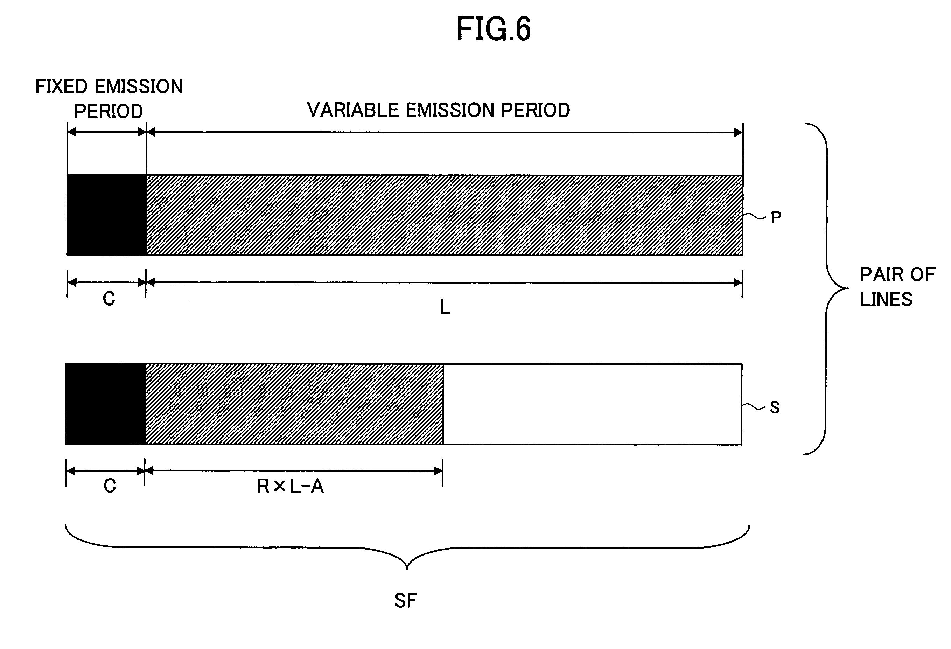

With reference to FIGs. 5 and 6, a gray level correction computation processing is described in detail, which processing is performed in the emission luminance ratio determining unit 63 of the emission luminance ratio calculating unit 60 as needed, after the determination of the emission luminance ratio R.

With reference to FIG. 5, an embodiment in which no gray level correction is performed is described. While the following description deals with a single sub-field, this is for the sake of ease of description. Since a total of such sub-fields constitutes one field, the description may considered applicable to one field.

FIG. 5 shows a main-display line P and a sub-display line S in one sub-field. Each of the display lines P and S is divided into a fixed emitting period and a variable emitting period. The fixed emitting period, which may include a reset period, an address period, and an emitting period for stabilizing discharge in a sustain period, is commonly provided in each sub-field. On the other hand, the variable emitting period is an adjustable sustain period necessary for realizing a desired luminance and a gray level; it corresponds to the number of sustain pulses. The main-display line P has the maximum number of sustain pulses in the variable emitting period when luminance is L. The luminance of the fixed emitting period is C.

The luminance of a display line is provided not just by the emission of sustain pulses but by the emission during the fixed emitting period. Therefore, when the luminance of the sub-display line S is the luminance L of the main-display line multiplied by the emission luminance ratio R, or $R \times L$, the luminance of the entire sub-display line S is $(C+R \times L)$, whose ratio to the luminance $(C+L)$ of the main-display line P as a whole is not R, thus resulting in a displacement of the gray level. As a result, gray level linearity is lost.

Thus, the following gray level correction may be performed. In order for the sub-display line S to emit light while maintaining gray level linearity, it is necessary to perform a correction taking into account the fixed emitting period when allocating sustain pulses to the main-display line P and the sub-display line S in adjacent two lines using the emission luminance ratio R.

With reference to FIG. 6, an embodiment is described in which the final emission luminance of the sub-display line S is determined by performing a gray level correction. FIG. 6 shows a main-display line P and a sub-display line S in one sub-field. FIG. 6 differs from FIG. 5 in that the luminance of the variable emitting period is shown as (R×L-A) where a correction value A is taken into consideration.

Referring to FIG. 6, in order to calculate to the emission of how many sustain pulses the luminance C of the fixed emitting period in one sub-field corresponds, the luminance C of the fixed emitting period is divided by the emission luminance of discharge of a single sustain pulse, thereby obtaining a value n. When the number of sustain pulses of the main-display line P in the sub-field is m, (n+m) corresponds to the value of the emission luminance (L+C) of the main-display line P in the entire sub-field in terms of the number of sustain pulses.

When the emission luminance ratio is R, the emission luminance of the sub-display line S in the entire sub-field corresponds to the luminance of the number of sustain pulses expressed by (n+m)×R. Thus, the number of sustain pulses which corresponds to the luminance of the sub-display line S in the variable period of the sub-field is calculated by Equation (2):

$$\text{Number of sustain pulses}=(n+m)\times R-n \qquad (2)$$

When the luminance due to the discharge of a single sustain pulse is K, the luminance of the sub-display line S in the variable period of the sub-field is expressed by Equation (3):

$$\text{Luminance}=K\times((n+m)\times R-n) \qquad (3)$$

where, since the luminance of the main-display line in the variable emitting period of the sub-field is L=K×m, rearranging Equation (3) and substituting gives Equation (4):

$$\text{Luminance}=K\times\{(R-1)\times n+m\times R\}$$
$$=R\times L-K\times(1-R)\times n \qquad (4)$$

Thus, from Equation (4), the correction value A in FIG. 6 is expressed by Equation (5):

$$A=K\times(1-R)\times n \qquad (5)$$

Thus, the fixed emitting period is converted into the number of sustain pulses, and, in accordance with the sum of this and the number of sustain pulses of the variable emitting period, allocation is made at the emission luminance ratio R, followed by subtracting the number of sustain pulses corresponding to the fixed emitting period. In this way, the sub-display line S can emit light while maintaining gray level linearity. Such a corrective control may be performed when it is desired to display gray levels accurately.

Alternatively, instead of the strict method described above with reference to FIG. 6, plural fixed emitting periods may be prepared and one may be selected from them depending on the value of the variable emitting period, and an allocation that has been corrected in accordance with the selected fixed emitting period may be applied. In this way, a valid corrective effect can be obtained without performing a complex corrective control.

When the emission luminance ratio R of plural sub-fields with smaller weights is made greater than zero, the luminance of a low gray level portion increases due to the fixed luminance period, compared with the case where only one of the display lines, namely, the main-display line alone is lighted. As a result, the expressive power of the low gray level portion decreases. Specifically, since the human eyes are the more sensitive to a difference in luminance of gray levels the darker the gray levels are. In other words, the human eyes have a higher gray level resolution with regard to darker gray levels. Thus, if the rate of change in gray levels is large at low gray levels, the gray level representation performance suffers. In order to prevent this, the emission luminance ratio R of plural sub-fields having weights smaller than a predetermined weight may be controlled to be zero.

In order to maintain gray level linearity, the emission luminance ratio R may be controlled to be the same for plural sub-fields having large weights.

Such a control of the emission luminance ratio R depending on the weight of the sub-field may be performed either by the emission luminance ratio determining unit 63 of the emission luminance ratio calculating unit 60 or by the sustain pulse number allocating unit 70.

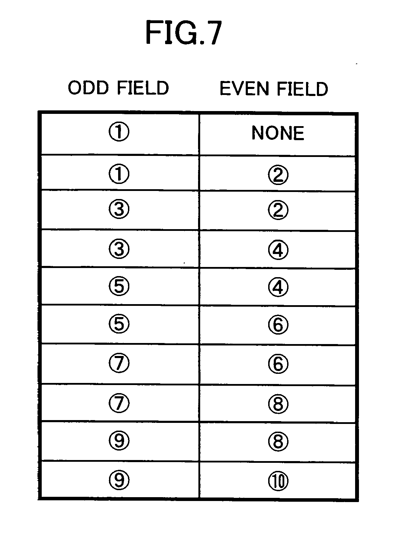

With reference to FIGs. 7 through 10, a control mode of the plasma display apparatus of the present embodiment is described. In this mode, depending on whether an input signal of the interlace system is of an odd field or an even field, the center of gravity of display of adjacent two lines is displaced. This control mode may be selected by the vertical synchronization one-line-displacement selecting switch 90 shown in FIG. 1.

FIG. 7 shows an example in which one line of data of an interlace signal is displayed by adjacent two lines simultaneously, where the center of gravity of display lines is displaced between the odd field and the even field.

In FIG. 7, in the odd field, the (2N-1)th (N is an integer of 1 or greater) line of data is displayed on the (2N-1)th line and the 2N-th line. In the even field, the 2N-th line of data is displayed on the 2N-th line and the (2N+1)th line. Thereby, the (2N-1)th line of data and the 2N-th line of data are displayed with their centers of gravity of display displaced by one line, thereby preventing a decrease in resolution. In the odd field, the (2N-1)th line is the main-display line and the 2N-th line is the sub-display line. In the even field, the 2N-th line is the main-display line and the (2N+1)th line is the sub-display line. In the example of FIG. 7, there are an even number of display lines, and in the odd field, the odd-numbered data are each displayed over two lines. In the even field, no display is made on the first display line, and the last of the even-numbered data is displayed on the last one line alone. Alternatively, the display lines of FIG. 7 may be displaced such that, in the even field, the even-numbered data are each displayed over two lines, while in the odd field, the first data is displayed on one line alone and no display is made on the last display line.

In order to perform the above control for displacing the center of gravity of display in a box-type PDP, it is necessary to switch the display electrodes used as scan electrodes in the odd field and the even field, between odd-numbered electrodes and even-numbered electrodes. For example, when an odd-numbered display electrode is the first display electrode and an even-numbered display electrode is the second display electrode, one of the first and the second display electrodes is used as a scan electrode in the odd field, while the other of the first and the second display electrodes is used as a scan electrode in the even field. The details are described below.

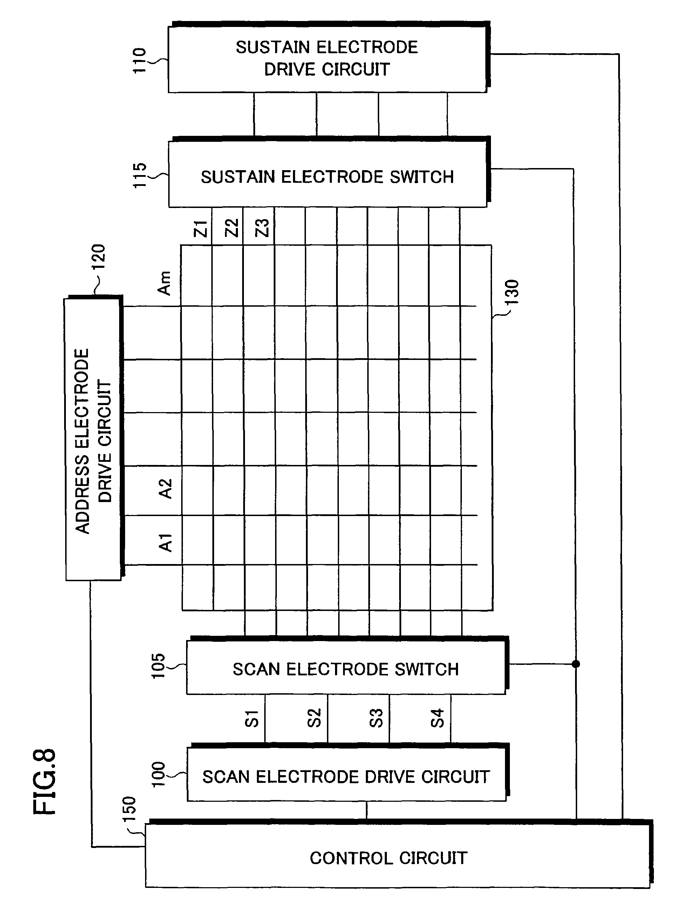

In order to thus switch the scan electrodes between the odd field and the even field, a scan electrode switch 105 and a sustain electrode switch 115 are provided, as shown in FIG. 8. The scan electrode switch 105 is configured to connect a scan electrode drive circuit 100, which successively outputs scan pulses during an addressing operation and a sustained discharge pulse during sustained discharge, to the first and the second display electrodes alternately. On the other hand, the sustain electrode switch 115 is configured to connect a sustain electrode drive circuit 110, which outputs a sustained discharge pulse during sustained discharge, to the first or the second display electrode alternately to which the scan electrode drive circuit 100 is not connected. The details are also described below.

FIG. 8 shows a circuit block diagram for realizing the first embodiment of the present invention. A plasma display panel (PDP) 130 is a box-type PDP. Of display electrodes Z1,Z2,..., odd-numbered display electrodes are referred to as the first display electrodes and even-numbered display electrodes are referred to as the second display electrodes. An address electrode drive circuit 120, which is configured to drive address electrodes A, is the same as that used in the PDP apparatus shown in FIG. 1. The scan electrode drive circuit 100 and the sustain electrode drive circuit 110 are also the same as those used in the PDP apparatus shown in FIG. 1. As mentioned above, the PDP apparatus of the present embodiment comprises the scan electrode switch 105 and the sustain electrode switch 115. A control circuit 150 writes the same data on adjacent two lines simultaneously and controls all display lines to be displayed, while also controlling the scan electrode switch 105 and the sustain electrode switch 115. In these respects, the apparatus of FIG. 8 differs from the plasma display apparatus shown in FIG. 1.

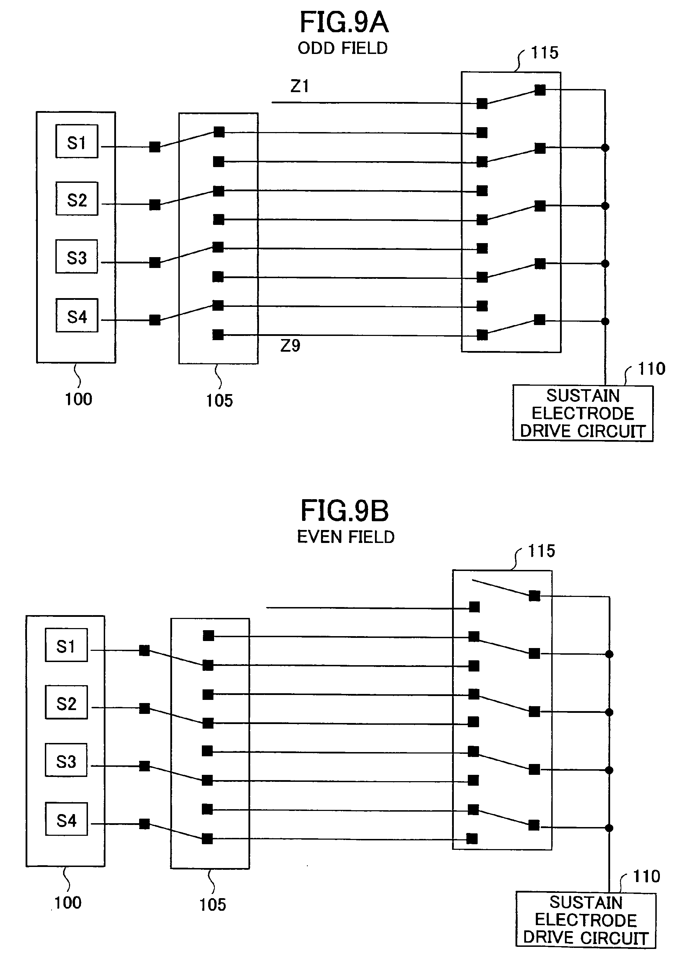

FIGs. 9A and 9B show how the scan electrode switch 105 and the sustain electrode switch 115 are connected to each other. FIG. 9A shows a connection state for an odd field, while FIG. 9B shows a connection state for an even field. As shown in FIG. 9A, in the odd field, the scan electrode switch 105 connects the second display electrodes (even-numbered display electrodes) Z2,Z4,... to the scan electrode drive circuit 100, while the sustain electrode switch 115 connects the first display electrodes (odd-numbered display electrodes) Z1,Z3,... to the sustain electrode drive circuit 110. As shown in FIG. 9B, in the even field, the scan electrode switch 105 connects the first display electrodes Z3,Z5,... to the scan electrode drive circuit 100 to the exclusion of the first one of the first display electrodes, while the sustain electrode switch 115 connects the second display electrodes Z2,Z4,... to the sustain electrode drive circuit 110.

In this connection configuration, in the odd field, scan pulses are applied to the second display electrodes Z2,Z4,..., successively, such that the first line of data is written on the first and the second display lines L1 and L2, and the third line of data is written on the third and the fourth display lines L3 and L4. In the even field, scan pulses are applied to the first display electrodes Z3,Z5,..., successively, such that the second line of data is written on the second and the third display lines L2 and L3, and the fourth line of data is written on the fourth and the fifth display lines L4 and L5. No writing is performed on the display line L1, and the final data is written on the last one of the display lines alone.

During a sustained discharge period, a sustain pulse is applied to the sustain electrode and the scan electrode alternately, with a positive voltage applied to an address electrode. Thereby, in a display cell in which an address discharge has taken place and a wall charge is stored, the voltage due to the wall charge is superposed on the sustain pulse, whereby the discharge start voltage is exceeded and a sustained discharge is produced. The sustained discharge continues during the application of the sustain pulse. During the sustained discharge, since each display cell is partitioned by the barrier walls, the sustained discharge does not affect an adjacent display cell to induce discharge. Such a writing during the address period results in a display as shown in FIG. 7.

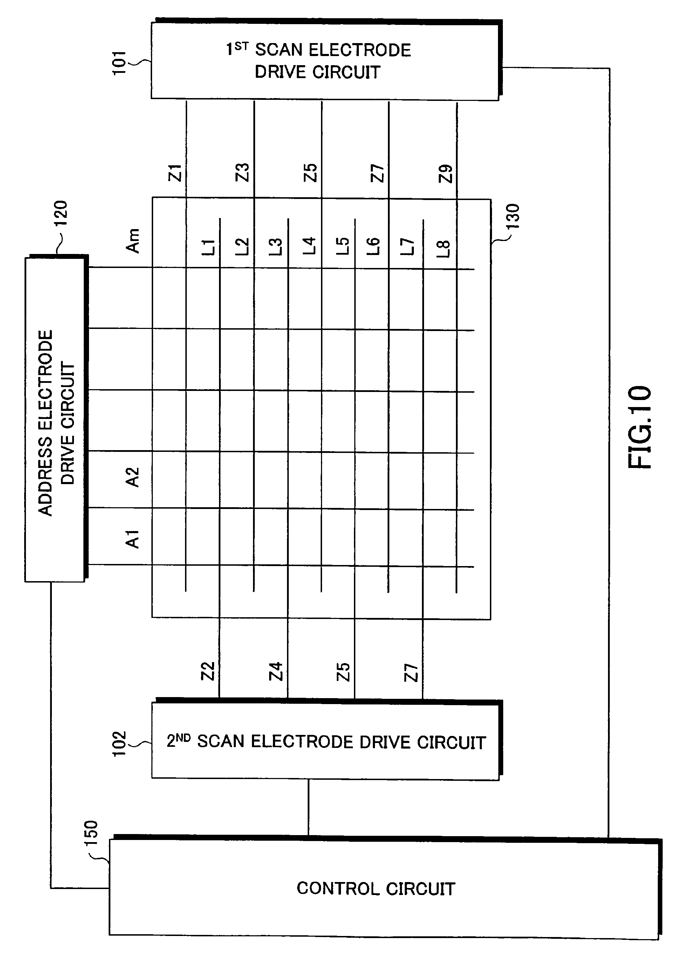

FIG. 10 shows a block diagram of a PDP apparatus according to a different embodiment from FIG. 8. A plasma display panel (PDP) 130, which is of the same box-type as in FIG. 8, also comprises the same address electrode drive circuit 120 as in FIG. 8. Of the display electrodes, odd-numbered display electrodes Z1,Z3,... are the first display electrodes, while even-numbered display electrodes Z2,ZA4,... are the second display electrodes. The present embodiment employs two scan electrode drive circuits 101 and 102. The first scan electrode drive circuit 101 drives the first display electrodes Z1,Z3,..., and the second scan electrode drive circuit 102 drives the second display electrodes Z2,Z4,.... A control circuit 150 controls the individual units.

Thus, not only is the emission luminance ratio R of the sub-display line to the main-display line on adjacent two lines controlled, but also the center of gravity of display is controlled to be displaced between the odd field and the even field by the vertical synchronization one-line-displacement selecting switch 90. Thus, a plasma display apparatus can be realized in which an optimum emission luminance can be obtained while further preventing a decrease in resolution.

Embodiment 2

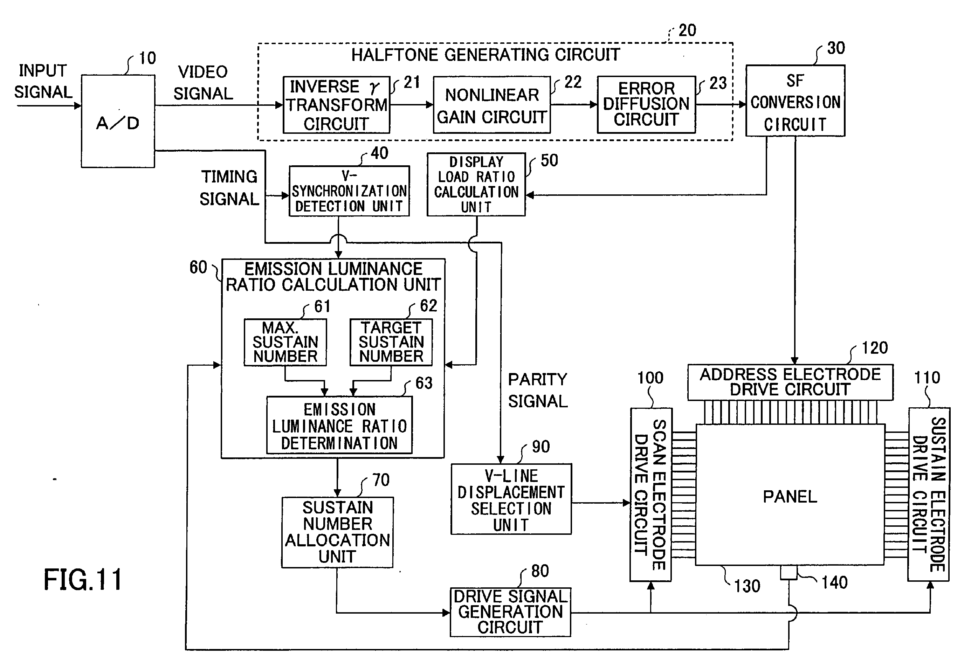

FIG. 11 shows a block diagram of a plasma display apparatus according to Embodiment 2 of the present invention. Constituent elements similar to those of Embodiment 1 are designated with the same reference numerals and their description is omitted.

The plasma display apparatus according to Embodiment 2 comprises an A/D converter 10; a halftone generating circuit 20; an SF (sub-field) conversion circuit 30; a vertical synchronization detecting unit 40; a display load factor calculating unit 50; an emission luminance ratio calculating unit 60; a sustain pulse number allocating unit 70; a drive signal generating circuit 80; a vertical synchronization one-line-displacement selecting switch 90; a scan electrode drive circuit 100; a sustain electrode drive circuit 110; an address electrode drive circuit 120; a display panel 130; and a temperature monitoring unit 140.

The plasma display apparatus of Embodiment 2 differs from Embodiment 1 in that the halftone generating circuit 20 includes an inverse-γ-transform circuit 21, a non-linear-gain circuit 22, and an error diffusion circuit 23. Other constituent elements are the same as those of Embodiment 1.

With reference to Embodiment 1, it has been mentioned how the low gray level representation property can be enhanced by controlling plural sub-fields having small weights less than a predetermined weight to have a zero emission luminance ratio R, and how gray level linearity can be maintained by controlling plural sub-fields having large weights greater than a predetermined weight to have the same emission luminance ratio R.

However, when the emission luminance ratio R for plural sub-fields having small weights is made zero, and the emission luminance ratio R for plural sub-fields having large weights is made greater than zero, points are produced where the luminance increases sharply with respect to the increase in gray levels.

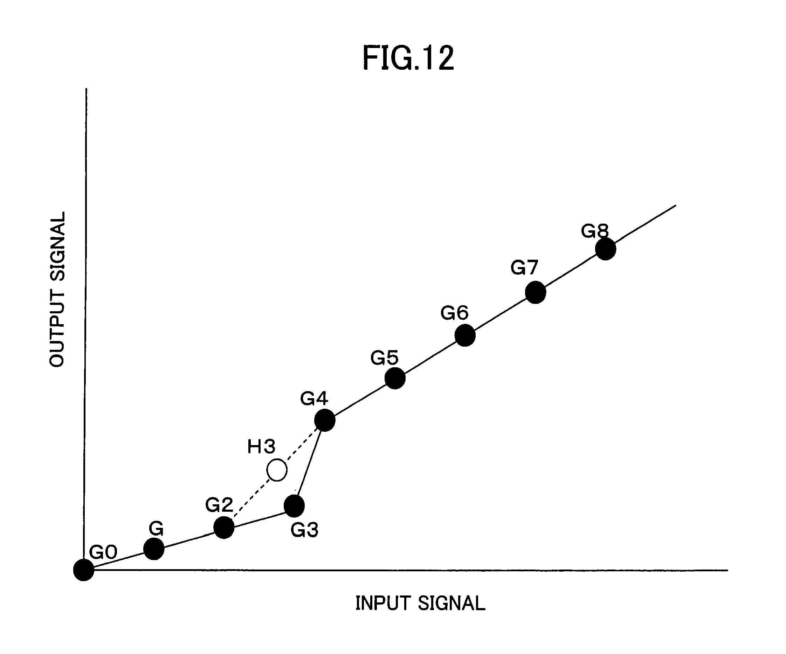

With reference to FIG. 12, such non-linear characteristics in the case of a small load are described. The horizontal axis shows the input signal, and the vertical axis shows the luminance of the output signal. As mentioned above, in order to improve the expressive power in a low gray level portion, it is necessary to reduce the luminance of plural sub-fields having smaller weights. For this purpose, it is necessary to make the emission luminance ratio R of plural sub-fields with smaller weights zero, while making the emission luminance ratio R of the others a predetermined value other than zero. In this case, compared with an increase in luminance at the low gray level portion, an increase in luminance of the other gray level portions becomes greater, whereby a luminance differential develops.

With reference to FIG. 12, G0, G1, G2, and G3 indicate gray levels that are made up of only those sub-fields having small weights such that the emission luminance ratio R is zero. G4, G5, G6, G7, and G8 indicate gray levels that include those sub-fields of which the emission luminance ratio R is a predetermined value other than zero. The characteristics line connecting G0 to G3 and the characteristics line connecting G4 to G8 have different rates of increase in luminance, resulting in a loss of gray level linearity. In this state, the loss of gray level linearity prevents an appropriate gray level representation of an image.

In the example of FIG. 12, the loss of gray level linearity can be restored by using a pseudo-gray level H3 in which G2 and G4 are allocated at a predetermined ratio, without using the gray level of G3.

In the plasma display apparatus of Embodiment 2, the halftone generating circuit 20 is configured to carry out such a gray level linearity maintaining process.

Referring back to FIG. 11, each component of the halftone generating circuit 20 is described.

The inverse-γ-transform circuit 21 is a signal characteristics conversion circuit for subjecting a received video signal that is transmission-γ-transformed to a restorative inverse transform, so as to obtain linear characteristics in an output signal.

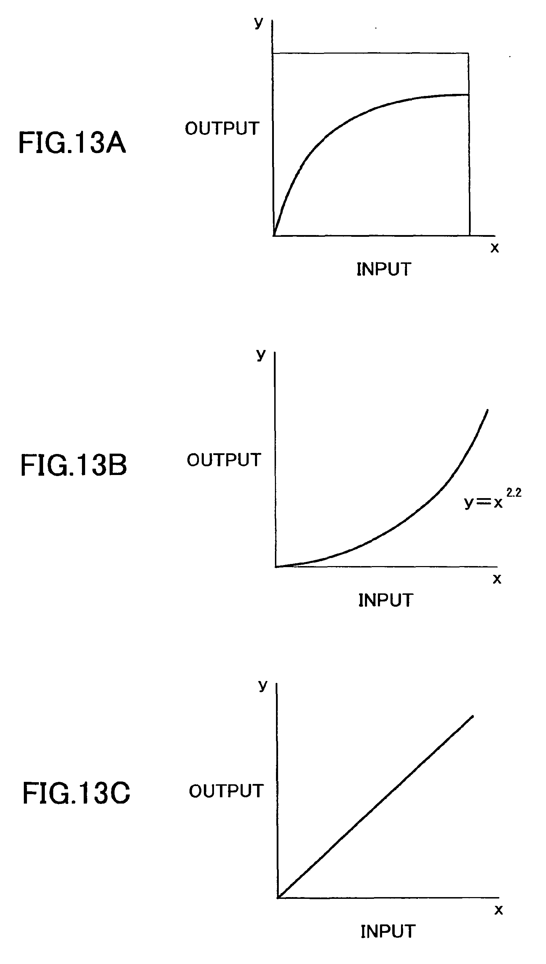

With reference to FIG. 13, the function of the inverse-γ-transform circuit 20 is described. In FIG. 12, an input signal is indicated by x and an output signal is indicated by y.

FIG. 13A shows the signal characteristics of a video signal that is transmission-γ-transformed and which is input to the inverse-γ-transform circuit. As shown, the transmission-γ-transformed video signal exhibits upwardly curved, increasing characteristics.

FIG. 13B shows the transform characteristics of the inverse-γ-transform circuit 30. The inverse-γ-transform circuit transforms the input signal x with characteristics such that $y = x^{2.2}$, to produce the output signal y. No such transform needs to be performed when the image display panel 90 is a cathode-ray tube; however, since the plasma display panel 90a has linear output characteristics, the transform is performed by the conversion circuit.

FIG. 13C shows the signal characteristics of an output video signal of the inverse-γ-transform circuit 30. As shown, the input signal and the output signal have linear characteristics. An image signal thus transformed by the inverse-γ-transform circuit 30 to have such linear characteristics is input to the non-linear-gain circuit 22.

The non-linear-gain circuit 22 is a circuit for non-linearly converting a first image signal that has been inverse-γ-transformed into a second image signal and representing the second image signal in terms of an integer portion and an error portion, such that any specific sub-field lighting pattern is not used.

Referring back to FIG. 12, the function of the non-linear-gain circuit 22 is described. In FIG. 12, because the emission luminance ratio R of the low gray level portions G0 to G3 is zero or a certain value close to zero, and the high gray level portions G4 to G8 have certain values other than zero, the rate of increase in luminance is pronounced between G3 and G4, resulting in the loss of linearity. Thus, the non-linear-gain circuit 22 allocates values at such a ratio that the sum of values G2 and G4 of the input signal, i.e., the first image signal, becomes H3, thus generating the second image signal, i.e., a pseudo-gray level H3. In this way, the loss of gray level linearity can be restored.

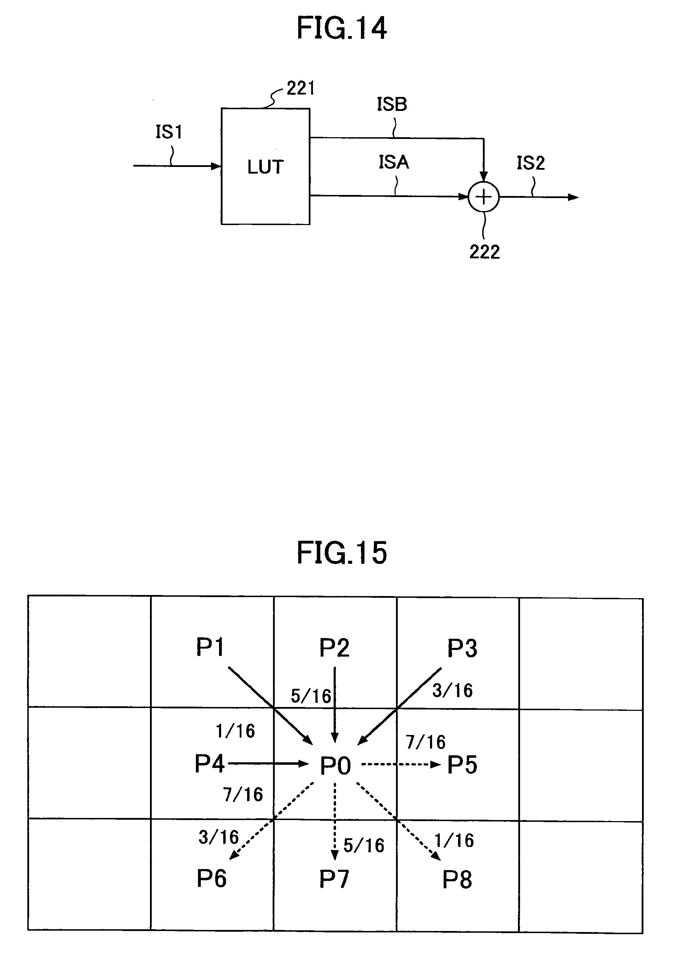

FIG. 14 shows an example of the non-linear-gain circuit 22. A lookup table 221 includes a predetermined table for a non-linear conversion. Upon entry of a first image signal IS1, the table outputs a corresponding integer portion ISA and a fractional portion ISB. An adder 222 is configured to add up the integer portion ISA and the fractional portion ISB, to output a second image signal IS2.

Referring back to FIG. 11, the second image signal that has been non-linearly converted by the non-linear-gain circuit 22 is input to an error diffusion circuit 23.

The error diffusion circuit 23 is configured to spatially or temporally diffuse the error portion of the second image signal from non-linear-gain circuit 22 when the error portion is not zero.

With reference to FIG. 15, an error diffusion process performed by the error diffusion circuit 23 is described. For example, into the error diffusion circuit 23 is input an 8-bit image signal, of which the lower-order one-bit signal is subjected to the error diffusion process, and the higher-order 7 bits are output. In the example of FIG. 15, the signal processing is performed using a pixel P0 as a pixel of interest. The process involves allocating predetermined weights to the value of display error, i.e., the lower-order one bit, of pixels P1, P2, and P3 one line before pixel P0, and of an immediately preceding pixel P4, as shown in the figure, and adding them to the input image signal of pixel P0. Further, a predetermined weight is allocated to the display error of pixel P0, i.e., the lower one bit thereof, and then diffuses it to adjacent pixels P5, P6, P7, and P8. The arrows with solid lines in FIG. 15 indicate the errors added to P0 from adjacent pixels, while the arrows with dotted lines indicate the error diffused from P0 to adjacent pixels. The numerical values attached to the arrows indicate the magnitude of each weight.

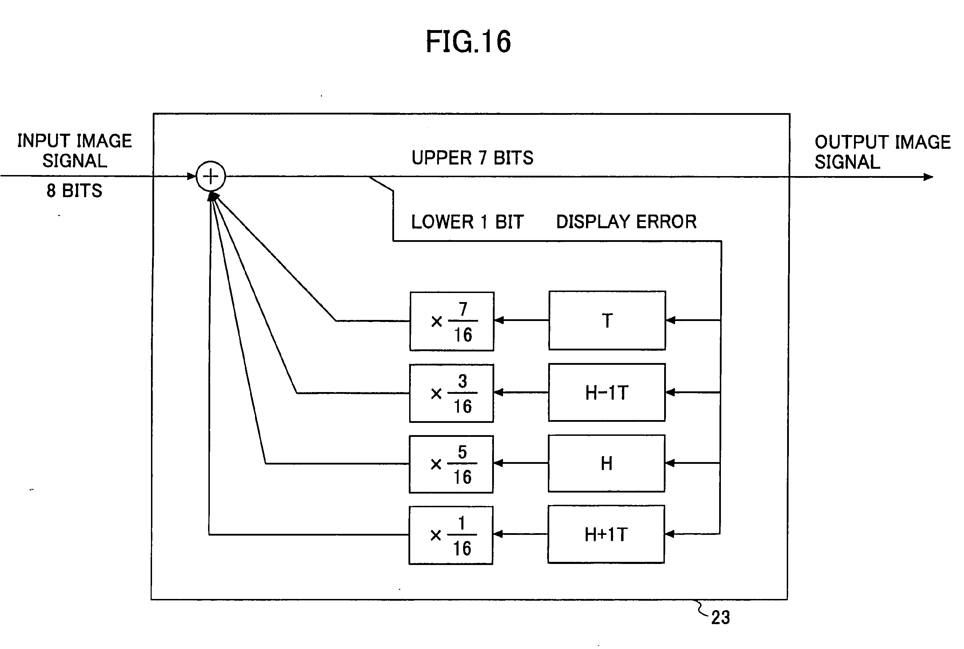

FIG. 16 shows a block diagram of an example of the error diffusion circuit 23. In FIG. 16, T is a one-pixel delay circuit, and H is a one-line delay circuit. The numerical values in the blocks following each of the delay circuits indicate the magnitude of each weight. As shown in FIG. 16, the upper-order 7 bits of the added result are output. As regards the error portions of the lower one bit, 7/16 is added to pixel P5 which follows pixel P0; 3/16 is added to pixel P6 which is lower-left to pixel P0; 5/16 is added to pixel P7 immediately below pixel P0; and 1/16 is added to pixel P8 which is lower-right to pixel P0. By performing such addition with respect to the individual pixels, the error can be diffused to the surrounding pixels.

By thus diffusing the error to the surrounding pixels by the error diffusion circuit 23, visually averaged gray levels can be represented, thus preventing an image quality degradation.

Alternatively, a dither process circuit may be used substituting for or in combination with the error diffusion circuit 23.

The various control techniques used in Embodiment 1 may be used in combination with Embodiment 2. For example, the gray level corrective control by Embodiment 1 described with reference to FIG. 6, or the control to displace the center of gravity of display depending on whether the field is even or odd, as described with reference to FIGs. 7 through 10, may be employed in Embodiment 2.

While the present invention has been described by way of preferred embodiments, it should be obvious to those skilled in the art that various changes, modifications, or substitutions may be made without departing from the scope of the present invention.

The present application is based on the Japanese Priority Application No. 2007-205710 filed August 7, 2007, the entire contents of which are hereby incorporated by reference.

**Claims**

1. A plasma display apparatus comprising a display panel having plural display lines and being configured to be driven by a sub-field method, and a drive circuit configured to drive the display panel so as to display one line of data of an interlaced input signal by a pair of a main-display line and an adjacent sub-display line simultaneously, **characterized in that** the apparatus further comprises:

   a maximum sustain pulse number calculating unit configured to calculate the maximum number of sustain pulses associated with the emission of light that can be made within one field corresponding to the main-display line, based on the vertical synchronization signal frequency of the input signal;
   a display load factor calculating unit configured to calculate a display load factor of the input signal in the one field;
   a target sustain pulse number determining unit configured to determine a target number of sustain pulses for the one field, based on the display load factor calculated by the display load factor calculating unit; and
   an emission luminance ratio determining unit configured to determine, based on a relationship between the target number of sustain pulses determined by the target sustain pulse number determining unit and the maximum number of sustain pulses, an emission luminance ratio of the sub-display line to the main-display line in the one field.

2. The plasma display apparatus according to claim 1, wherein the emission luminance ratio determining unit is configured to make the emission luminance ratio greater than zero when the target number of sustain pulses is greater than the maximum number of sustain pulses.

3. The plasma display apparatus according to claim 2, wherein the emission luminance ratio is the ratio of a value obtained by subtracting the maximum number of sustain pulses from the target number of sustain pulses, to the maximum number of sustain pulses.

4. The plasma display apparatus according to any one of claims 1 through 3, wherein the emission luminance ratio determining unit makes the emission luminance ratio zero when the target number of sustain pulses is not greater than the maximum number of sustain pulses.

5. The plasma display apparatus according any one of claims 1 through 4, wherein the maximum value that the target number of sustain pulses can take is approximately twice the maximum number of sustain pulses.

6. The plasma display apparatus according any one of claims 1 through 5, further comprising a temperature monitoring unit configured to monitor the temperature of the display panel or a circuit component,
   wherein the emission luminance ratio determining unit makes the emission luminance ratio zero when the temperature monitoring unit detects that the temperature exceeds a predetermined temperature.

7. The plasma display apparatus according to any one of claims 1 through 6, wherein, when the rate of change of the display load factor between a previous field and the one field exceeds a predetermined maximum load change rate, the emission luminance ratio determining unit causes the emission luminance ratio to vary over plural fields within the range of the predetermined maximum load change rate.

8. The plasma display apparatus according to any one of claims 1 through 7, further comprising a sustain pulse number allocating unit configured to allocate a certain number of sustain pulses to the sub-display line in plural sub-fields of the one field, based on the emission luminance ratio of the sub-display line to the main-display line in the one field.

9. The plasma display apparatus according to claim 8, wherein the sustain pulse allocating unit is configured to allocate a predetermined number of sustain pulses which is not based on the luminance ratio to a sub-field having a weight smaller than the predetermined weight.

**10.** The plasma display apparatus according to claim 9, wherein the predetermined number of sustain pulses is zero.

**11.** The plasma display apparatus according to any one of claims 1 through 10, further comprising:

a non-linear circuit configured to non-linearly convert a first image signal based on the input signal to a second image signal, and to represent the second image signal in terms of an integer portion and an error portion; and an error diffusion circuit configured to diffuse the error portion spatially or temporally when the error portion is not zero.

**12.** The plasma display apparatus according to any one of claims 1 through 11, wherein, depending on whether the one field is an odd field or an even field, the combination of the main-display line and the sub-display line is changed so that the center of gravity of display is displaced.

**13.** A method of driving a plasma display panel having plural display lines, wherein one line of data of an interlaced input signal is displayed by a pair of a main-display line and an adjacent sub-display line simultaneously, **characterized in that** the method comprises the steps of:

calculating the maximum number of sustain pulses that are associated with the emission of light that can be made within one field, based on the vertical synchronization signal frequency of the input signal; calculating a display load factor of the input signal of the one field; determining a target number of sustain pulses in the one field based on the display load factor; and determining an emission luminance ratio of the sub-display line to the main-display line in the one field, based on a relationship between the target number of sustain pulses and the maximum number of sustain pulses.

**14.** The plasma display panel driving method according to claim 13, further comprising the step of allocating, based on the emission luminance ratio of the sub-display line to the main-display line in the one field, a certain number of sustain pulses to the sub-display line in plural sub-fields of the one field.

# FIG.1

# FIG.2

START

200 — DETECT V-SYNCH FREQUENCY OF INPUT SIGNAL

210 — CALCULATE DISPLAY LOAD RATIO

220 — DETERMINE SUSTAIN PULSE NUMBER FOR TARGET LUMINANCE (N)

230 — DETERMINE MAX. SUSTAIN PULSE NUMBER WITHIN ONE FIELD (M)

240 — M < N ?

Y

N

250 — $R = \dfrac{N - M}{M}$

260 — R = 0

270 — DIVIDE SUSTAIN PULSE NUMBER FOR EACH SF INTO 1ST AND 2ND LINES BY R

END

EP 2 023 324 A1

# FIG.3

TARGET SUSTAIN
PULSE NUMBER

MAX. SUSTAIN PULSE
NUMBER WITHIN ONE FIELD

LUMINANCE (cd/m²)

N

M

0

DISPLAY LOAD RATIO (%)

100

# FIG.4

EP 2 023 324 A1

RESET PERIOD    ADDRESS PERIOD    SUSTAIN PERIOD

L

P

R × L

S

PAIR OF
LINES

SF

# FIG.5

EP 2 023 324 A1

FIXED EMISSION
PERIOD

VARIABLE EMISSION PERIOD

C

L

~P

PAIR OF
LINES

C

R × L

~S

SF

# FIG.6

FIXED EMISSION
PERIOD

VARIABLE EMISSION PERIOD

EP 2 023 324 A1

PAIR OF
LINES

C

L

~ P

C

R × L−A

~ S

SF

# FIG.7

| ODD FIELD | EVEN FIELD |
|:---:|:---:|
| ① | NONE |
| ① | ② |
| ③ | ② |
| ③ | ④ |
| ⑤ | ④ |
| ⑤ | ⑥ |
| ⑦ | ⑥ |
| ⑦ | ⑧ |
| ⑨ | ⑧ |
| ⑨ | ⑩ |

# FIG.8

# FIG.9A
## ODD FIELD

# FIG.9B
## EVEN FIELD

FIG.10

INPUT SIGNAL

10 A／D

VIDEO SIGNAL

20 HALFTONE GENERATING CIRCUIT

21 INVERSE γ TRANSFORM CIRCUIT

22 NONLINEAR GAIN CIRCUIT

23 ERROR DIFFUSION CIRCUIT

30 SF CONVERSION CIRCUIT

40 V-SYNCHRONIZATION DETECTION UNIT

TIMING SIGNAL

50 DISPLAY LOAD RATIO CALCULATION UNIT

60 EMISSION LUMINANCE RATIO CALCULATION UNIT

61 MAX. SUSTAIN NUMBER

62 TARGET SUSTAIN NUMBER

63 EMISSION LUMINANCE RATIO DETERMINATION

70 SUSTAIN NUMBER ALLOCATION UNIT

80 DRIVE SIGNAL GENERATION CIRCUIT

90 V-LINE DISPLACEMENT SELECTION UNIT

PARITY SIGNAL

100 SCAN ELECTRODE DRIVE CIRCUIT

110 SUSTAIN ELECTRODE DRIVE CIRCUIT

120 ADDRESS ELECTRODE DRIVE CIRCUIT

140 PANEL

130

FIG.11

26

# FIG.12

EP 2 023 324 A1

FIG.13A

INPUT

FIG.13B

$y = x^{2.2}$

INPUT

x

FIG.13C

y

OUTPUT

INPUT

x

# FIG.14

# FIG.15

# FIG.16

INPUT IMAGE SIGNAL 8 BITS

OUTPUT IMAGE SIGNAL

UPPER 7 BITS

LOWER 1 BIT    DISPLAY ERROR

$\times \dfrac{7}{16}$    T

$\times \dfrac{3}{16}$    H−1T

$\times \dfrac{5}{16}$    H

$\times \dfrac{1}{16}$    H+1T

23

EP 2 023 324 A1

FIG.17

# FIG.18

| ODD FIELD | EVEN FIELD |
|:---:|:---:|
| ① | |
| | ② |
| ③ | |
| | ④ |
| ⑤ | |
| | ⑥ |
| ⑦ | |
| | ⑧ |
| ⑨ | |
| | ⑩ |

# FIG.19

| ODD FIELD | EVEN FIELD |
|:---:|:---:|
| ① | ② |
| ① | ② |
| ③ | ④ |
| ③ | ④ |
| ⑤ | ⑥ |
| ⑤ | ⑥ |
| ⑦ | ⑧ |
| ⑦ | ⑧ |
| ⑨ | ⑩ |
| ⑨ | ⑩ |

**EUROPEAN SEARCH REPORT**

Application Number

EP 08 25 0821

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | EP 1 336 951 A (FUJITSU HITACHI PLASMA DISPLAY [JP]) 20 August 2003 (2003-08-20) * paragraphs [0021] - [0027]; figures 8-10,14 * ----- | 1-14 | INV. G09G3/288 |
| A | EP 1 775 704 A (SAMSUNG SDI CO LTD [KR]) 18 April 2007 (2007-04-18) * paragraph [0016] - paragraph [0032]; figure 4 * ----- | 1-14 | |

TECHNICAL FIELDS
SEARCHED (IPC)

G09G

The present search report has been drawn up for all claims

| Place of search | Date of completion of the search | Examiner |
|---|---|---|
| The Hague | 15 October 2008 | Fanning, Neil |

EPO FORM 1503 03.82 (P04C01)

## ANNEX TO THE EUROPEAN SEARCH REPORT
## ON EUROPEAN PATENT APPLICATION NO.

EP 08 25 0821

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2008

| Patent document cited in search report | | Publication date | Patent family member(s) | | Publication date |
|---|---|---|---|---|---|
| EP 1336951 | A | 20-08-2003 | CN | 1438620 A | 27-08-2003 |
| | | | JP | 2003233346 A | 22-08-2003 |
| | | | TW | 578129 B | 01-03-2004 |
| | | | US | 2003151566 A1 | 14-08-2003 |
| EP 1775704 | A | 18-04-2007 | CN | 1949316 A | 18-04-2007 |
| | | | JP | 2007108756 A | 26-04-2007 |
| | | | US | 2007080900 A1 | 12-04-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10133621 A
- JP 2003233346 A
- JP 2007205710 A